# EUROPÄISCHE PATENTSCHRIFT

(11) **EP 3 028 555 B1**
(45) Veröffentlichungstag und Bekanntmachung des Hinweises auf die Patenterteilung: **23.08.2017**
(21) Anmeldenummer: 14196146.6
(22) Anmeldetag: 03.12.2014
(51) Int. Cl.: A01B 29/04, A01B 29/06

(54) **Furchenandruckvorrichtung**
Furrow pressing device
Dispositif de pressage de sillon

(43) Veröffentlichungstag der Anmeldung: 08.06.2016
(73) Patentinhaber: Kverneland AS, 4355 Kvernaland (NO)
(72) Erfinder: Tomberge, Christoph, 59519 Möhnesee (DE); Nühse, Josef, 59510 Lippetal (DE)
(74) Vertreter: Schweiger, Johannes

(56) Entgegenhaltungen:
- EP-A1- 0 487 148
- EP-A1- 1 590 999
- DE-U1- 8 026 581
- FR-A1- 2 281 050

## Beschreibung

Die vorliegende Erfindung betrifft eine Furchenandruckvorrichtung gemäß dem Oberbegriff des Anspruchs 1.

Solche Vorrichtungen sind aus dem Stand der Technik bekannt. Eine herkömmliche Vorrichtung weist eine Andruckrolle zum Verdichten des Bodens auf sowie mindestens zwei Abstreifeinrichtungen zur Abstreifung von Erdreich von der Andruckrolle, wobei die Abstreifeinrichtung in lateraler Richtung entlang der Andruckrolle nebeneinander angeordnet sind.

Die Druckschrift DE 8 026 581 U1 offenbart eine Walze mit auf einem umfangsseitig geschlossenen oder im Wesentlichen geschlossenen Walzenkörper angeordneten, in Umfangsrichtung ausgerichteten Zahnreihen mit zwischen den Zahnreihen angeordneten, auf dem Walzenkörper mit Anstellwinkel anliegenden Abstreifern.

Bei herkömmlichen Vorrichtungen sammeln sich nachteiliger Weise zwischen den Abstreifeinrichtungen Erdreichklumpen an, die zu einer Blockierung der Andruckrolle und somit zu einem schlechten Verdichtungsergebnis führen können.

Es ist daher die Aufgabe der vorliegenden Erfindung, eine Furchenandruckvorrichtung zur Verfügung zu stellen, mit der der Boden besser verdichtet werden kann und der weniger anfällig ist für Blockierungen durch angesammeltes Erdreich.

Diese Aufgabe wird mit der Furchenandruckvorrichtung (im Folgenden "Vorrichtung" genannt) gemäß Anspruch 1 gelöst. Vorteilhafte Weiterbildungen der Erfindung sind in den Unteransprüchen angegeben.
Der Grundgedanke der Erfindung besteht darin, dass in lateraler Richtung nebeneinander angeordnete Abstreifeinrichtungen zum Abstreifen von Erdreich höhenversetzt zueinander angeordnet sind. Mit höhenversetzt ist gemeint, dass lateral benachbarte Abstreifeinrichtungen in unterschiedlichen Höhen angeordnet sind. Durch diese höhenversetzte Anordnung kann vorteilhaft erreicht werden, dass der seitliche Spalt beziehungsweise die seitlichen Spalten zwischen benachbarten Abstreifeinrichtungen derart groß ist/sind, dass sich Erdreichklumpen nicht mehr zwischen den Abstreifeinrichtungen ansammeln können. Dadurch kann ein Blockieren der Andruckrolle weitgehend verhindert werden. Außerdem wird die Verdichtung des Erdreichs beziehungsweise des Bodens und damit auch der Furche verbessert, sodass auch das zuvor eingebrachte Saatgut besser unter dem Erdreich verdeckt werden kann und eine bessere Aussaat beziehungsweise ein besseres Aussaatergebnis erreicht werden kann.
Die Furchenandruckvorrichtung wird im landwirtschaftlichen Bereich verwendet und kann in einer Fahrtrichtung bewegt, insbesondere von einem Zugfahrzeug in der Fahrtrichtung gezogen werden. Die Vorrichtung kann insbesondere hinter einer Sävorrichtung angeordnet sein, um die durch die Sävorrichtung erzeugte Furche nach dem Einbringen des Saatguts wieder zu verschließen. Die Richtungsangaben vorne und hinten beziehen sich grundsätzlich auf die Fahrtrichtung der Vorrichtung.

Die Andruckrolle dient zum Verdichten des Bodens, indem sie mit ihrem Gewicht auf den Erdboden drückt und das Erdreich nach dem Einbringen des Saatguts wieder verdichtet. Die Andruckrolle ist rotierbar und dreht sich durch die Bewegung der Vorrichtung und insbesondere durch die Zugbewegung des Zugfahrzeugs mit. Damit die Andruckrolle besser in den Erdboden eingreifen und dadurch besser angetrieben werden kann, sodass ein Stillstand vermieden wird, kann die Andruckrolle an ihrer Oberfläche eine Vielzahl an hervorragenden Zinken aufweisen, die beim Drehen der Rolle in den Erdboden derart eingreifen, sodass die Andruckrolle mit der Bewegung der Vorrichtung mitgedreht werden kann. Insbesondere kann es vorgesehen sein, dass die Abstreifeinrichtungen in den Zwischenräumen zwischen benachbarten Zinken angeordnet sind.
Grundsätzlich ist mit lateraler Richtung diejenige Richtung gemeint, die senkrecht zur Fahrtrichtung und parallel zur Horizontalen angeordnet ist, wobei sich auch die Andruckrolle entlang der lateralen Richtung erstrecken kann. Die Vorrichtung kann weiterhin zwei Befestigungsflansche aufweisen, die seitlich an den beiden Enden der Andruckrolle angeordnet sind. Zwischen den beiden Flanschen ist insbesondere ein Tragbalken angeordnet, der in lateraler Richtung und insbesondere parallel zur Längsachse der Andruckrolle angeordnet ist. An diesem Tragbalken können Tragbügel angeordnet sein, an denen die Abstreifeinrichtungen befestigt sind. Die Befestigungsbügel können mit dem Tragbalken verschweißt oder an diesen angeschraubt sein.

Erfindungsgemäß sind in lateraler Richtung benachbarte Abstreifeinrichtungen höhenversetzt zueinander angeordnet. In vertikaler Richtung gesehen ist somit eine erste Abstreifeinrichtung höher angeordnet als eine benachbarte zweite Abstreifeinrichtung. Erfindungsgemäss ist zumindest jede zweite Abstreifeinrichtung höhenverstellbar ausgebildet, wodurch eine bessere Anpassung an unterschiedliche Böden beziehungsweise Bodendichten erfolgen kann. Erfindungsgemäss erfolgt diese Höhenverstellung automatisch, insbesondere hydraulisch. Es kann vorgesehen sein, dass Sensoren die Qualität des Erdreichs beziehungsweise die Erdreichdichte ermitteln und in Abhängigkeit dieser Daten eine Einstellung der Höhe der Abstreifeinrichtung erfolgt.
In einer besonderen Ausführungsform sind die Abstreifeinrichtungen an in Richtung der Andruckrolle weisenden Stirnseiten spitz zulaufend ausgebildet. Dies ermöglicht ein verbessertes Abstreifen von Erdreich. In einer besonderen Ausführungsform sind die Abstreifeinrichtungen plattenförmig ausgebildet. Plattenförmig meint, dass die Abstreifeinrichtungen entlang einer Haupterstreckungsebene ausgebildet sind, wobei die Dicke der Abstreifeinrichtungen im Vergleich zur Ausdehnung in der Haupterstreckungsebene klein ist. Die Abstreifeinrichtungen können insbesondere flächig ausgebildet sein. In einer besonderen Ausführungsform sind die Abstreifeinrichtungen entlang einer, insbesondere parallel zur Andruckrolle angeordneten, Biegelinie gebogen, um ein besseres Abstreifen zu erreichen.
Die, insbesondere flächig ausgebildeten und/oder plattenförmigen, Abstreifeinrichtungen können, insbesondere mit ihrer Haupterstreckungsebene, mit einem Anstellwinkel zur Horizontalen angeordnet sein, wobei der Anstellwinkel insbesondere zumindest größer als 5 Grad ist. Der Anstellwinkel kann alternativ größer als 10 Grad, größer als 15 Grad, größer als 20 Grad, größer als 25 Grad, größer als 30 Grad oder noch größer ausgebildet sein.

In einer anderen Ausführungsform können die, insbesondere plattenförmigen, Abstreifeinrichtungen derart geneigt angeordnet sein, dass sie, insbesondere mit ihrer Haupterstreckungsebene oder an der in Richtung der Andruckrolle weisenden Stirnseite, tangential zur Oberfläche der Andruckrolle angeordnet sind. Eine Abweichung von weniger als 10°, insbesondere weniger als 5°, vorzugsweise weniger als 2°, nach oben oder unten soll als tangential angesehen werden.

Der Anstellwinkel bzw. die Neigung kann insbesondere mit der Höhe der jeweiligen Abstreifeinrichtung variieren und insbesondere mit der Höhe größer werden. Mit anderen Worten: eine tiefer angeordnete Abstreifeinrichtung hat einen geringeren Anstellwinkel bzw. eine geringere Neigung als eine höher angeordnete Abstreifeinrichtung.

In einer besonders bevorzugten Ausführungsform ist der Anstellwinkel bzw. die Neigung, insbesondere automatisch, einstellbar. Der Anstellwinkel bzw. die Neigung kann manuell, elektrisch, hydraulisch und/oder pneumatisch eingestellt werden.

Es kann sein, dass der Anstellwinkel bzw. die Neigung, insbesondere automatisch, vergrößert wird, wenn die Abstreifeinrichtung nach oben versetzt wird und, dass der Anstellwinkel, insbesondere automatisch, verkleinert wird, wenn die Abstreifeinrichtung nach unten versetzt wird. Dieser Verstellmechanismus des Anstellwinkels bzw. der Neigung kann auch mit der, insbesondere automatischen, Höhenverstellung gekoppelt werden.

Die Erfindung wird im Folgenden durch Figuren illustriert, die Folgendes zeigen:
- Figur 1:: eine Furchenandruckvorrichtung gemäß einer beispielhaften Ausführungsform in einer perspektivischen Ansicht,
- Figur 2:: die Vorrichtung aus Figur 1 von hinten gesehen,
- Figur 3:: die Vorrichtung aus Figur 1 von der Seite gesehen,
- Figur 4:: schematisch einen Teilbereich der Vorrichtung in einer vergrößerten Ansicht,
- Figur 5:: den Teilbereich aus Figur 4 in einer perspektivischen Ansicht.

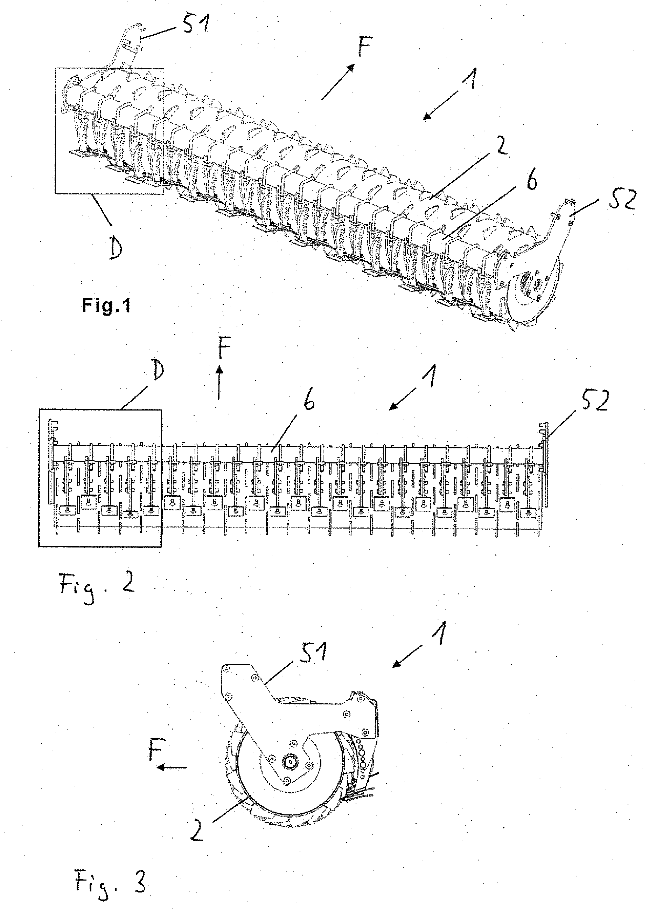

Figur 1 zeigt schematisch eine Furchenandruckvorrichtung 1 (im Folgenden "Vorrichtung 1" genannt) gemäß einer beispielhaften Ausführungsform in einer perspektivischen Ansicht. Die Vorrichtung 1 kann in einer Fahrtrichtung F von einer nicht dargestellten Zugmaschine gezogen werden.

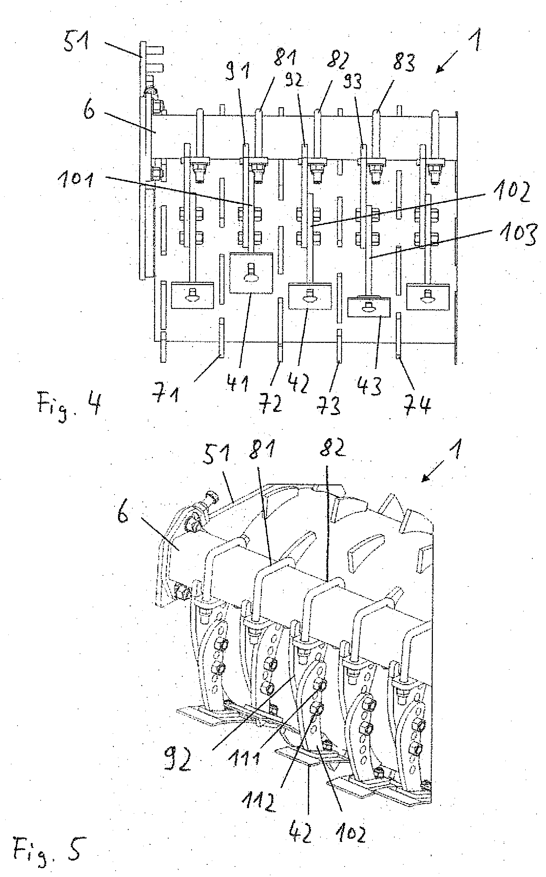

Mit dem Buchstaben D ist ein Detailrahmen bzw. ein Detailfenster bezeichnet, welches einen Teilbereich der Vorrichtung 1 kennzeichnet, der in den Figuren 4 und 5 größer dargestellt ist.

Die Vorrichtung 1 weist seitlich zwei Befestigungsflansche 51, 52 auf. Die Flansche 51, 52 können mit der nicht dargestellten Zugmaschine verbunden werden. Zwischen den Flanschen 51, 52 ist ein Tragbalken 6 angeordnet, der in lateraler Richtung zwischen den Flanschen verläuft, sodass der Tragbalken 6 senkrecht zur Fahrtrichtung F und parallel zur Horizontalen angeordnet ist.

Die Vorrichtung 1 weist eine Andruckrolle 2 auf. Die Andruckrolle 2 ist zwischen den Flanschen 51, 52 angeordnet. Die Andruckrolle 2 verläuft mit ihrer Längsachse in lateraler Richtung senkrecht zur Fahrtrichtung F und parallel zur Horizontalen, wobei die Andruckrolle 2 mit ihrer Längsachse parallel zum Tragbalken 6 angeordnet ist.

Die Andruckrolle 2 ist durch das Ziehen der Zugmaschine in Fahrtrichtung F antreibbar, wobei eine Vielzahl an Zinken 71, 72, 73, 74 (siehe Figur 4) auf der Oberfläche der Andruckrolle angeordnet sind. Die Zinken 71, 72, 73, 74 greifen in den Erdboden ein und ermöglichen, dass die Andruckrolle 2 mitgedreht wird, ohne dass sie blockieren kann. In Fahrtrichtung F gesehen hinter der Andruckrolle 2 sind eine Vielzahl an Abstreifeinrichtungen 41, 42, 43 angeordnet (siehe Detailansicht des Rahmens D in den Figuren 4 und 5). Die Abstreifeinrichtungen 41, 42, 43 sind über die Länge der Andruckrolle 2 in lateraler Richtung verteilt angeordnet. Die Abstreifeinrichtungen 41, 42, 43 sind mit Befestigungsbügeln 81, 82, 83 (siehe Figur 4) am Tragbalken 6 befestigt. Die Befestigungsbügel 81, 82, 83 können beispielsweise am Tragbalken 6 festgeschweißt oder mit diesem verschraubt sein.

Erfindungsgemäß sind die Abstreifeinrichtungen 41, 42, 43 höhenversetzt zueinander angeordnet (siehe auch Figuren 4 und 5). Die linke Abstreifeinrichtung 41 ist höher angeordnet als die mittlere Abstreifeinrichtung 42, wobei die mittlere Abstreifeinrichtung 42 höher angeordnet ist als die rechte Abstreifeinrichtung 43.

Figur 2 zeigt die Vorrichtung aus Figur 1 in einer Ansicht von hinten in Richtung der Fahrtrichtung F. Figur 3 zeigt die Vorrichtung aus Figur 1 und 2 in einer Seitenansicht von links. Dazu wird auf die Figur 1 verwiesen.

Figur 4 zeigt schematisch den linken mit dem Rahmen D gekennzeichneten Abschnitt der Vorrichtung 1 aus Figur 1 in einer vergrößerten Ansicht. Die Zinken 71, 72, 73, 74 sind in Reihen angeordnet, die lateral voneinander beabstandet sind. Zwischen den Zinken 71, 72, 73, 74 sind die Abstreifeinrichtungen 41, 42, 43 angeordnet. Die Abstreifeinrichtungen 41, 42, 43 sind höhenversetzt zueinander angeordnet. Außerdem sind die Abstreifeinrichtungen 41, 42, 43 mit einem Anstellwinkel zur Horizontalen angeordnet, wobei die Abstreifeinrichtung 41 einen größeren Anstellwinkel aufweist als die Abstreifeinrichtungen 42, welche wiederum einen größeren Anstellwinkel aufweist als die Abstreifeinrichtung 43. Die Anstellwinkel sind derart ausgebildet, dass die plattenförmig ausgebildeten Abstreifeinrichtungen in ihrer Verlängerung tangential zur Oberfläche der Andruckrolle 2 angeordnet sind.
Die Abstreifeinrichtungen 41, 42, 43 sind mit ersten Stangen 101, 102, 103 verbunden. Die ersten Stangen 101, 102, 103 erstrecken sich im Wesentlichen parallel zur Vertikalen nach oben. Die ersten Stangen 101, 102, 103 weisen Durchgangsöffnungen auf, die in vertikaler Richtung verteilt angeordnet sind. Die ersten Stangen 101, 102, 103 sind mit Schrauben mit zweiten Stangen 91, 92, 93 verbunden. Die zweiten Stangen 91, 92, 93 erstrecken sich von der Schraubverbindung in vertikaler Richtung nach oben. Im Bereich des Tragbalkens 6 sind die zweiten Stangen 91, 92, 93 mit Befestigungsbügeln 81, 82, 83 verbunden. Die Befestigungsbügel 81, 82, 83 umgreifen jeweils den Tragbalken 6 und sind mit diesem verschweißt beziehungsweise verschraubt. Zu einer nicht erfindungsgemässen Höhenverstellung werden die Schrauben der Schraubverbindung zwischen den ersten Stangen 101, 102, 103 und den zweiten Stangen 91, 92, 93 gelöst und die ersten Stangen 101, 102, 103 werden nach oben oder unten, je nach gewünschter Höhe, versetzt.

Figur 5 zeigt schematisch den Ausschnitt der Vorrichtung 1 aus Figur 4 in einer perspektivischen Ansicht. Hier sind die Durchgangsöffnungen der ersten Stangen 101, 102, 103 und der zweiten Stangen 91, 92, 93 zu erkennen. Außerdem sind die Verbindungsschrauben 111, 112 erkennbar. Die Verbindungsschrauben 111, 112 durchgreifen zueinander korrespondierende Öffnungen in den ersten Stangen 101, 102, 103 und den zweiten Stangen 91, 92, 93. Zu einer nicht erfindungsgemässen Höhenverstellung werden die Schrauben 111, 112 gelöst und die ersten Stangen 101, 102, 103 werden nach oben oder unten verschoben, um die gewünschte Höhe einzustellen. Die Schrauben 111 und 112 werden dann durch die entsprechenden Durchgangsöffnungen in den ersten Stangen 101, 102, 103 durchgesteckt und befestigt.

### Bezugszeichen

- 1: Furchenandruckvorrichtung
- 2: Andruckrolle
- 41, 42, 43: Abstreifeinrichtung
- 51, 52: Befestigungsflansch
- 6: Tragbalken
- 71,72,73,74: Zinken
- 81, 82, 83: Befestigungsbügel
- 91, 92, 93: Stangen
- 101, 102, 103: Stangen
- 111, 112: Schrauben
- D: Detailrahmen
- F: Fahrtrichtung

## Patentansprüche

1. Landwirtschaftliche Furchenandruckvorrichtung (1) aufweisend:
- eine Andruckrolle (2) zum Verdichten des Bodens,
- mindestens zwei Abstreifeinrichtungen (41, 42, 43) zum Abstreifen von Erdreich von der Andruckrolle (2), wobei die Abstreifeinrichtungen (41, 42, 43) in lateraler Richtung entlang der Andruckrolle (2) nebeneinander angeordnet sind,
wobei
lateral benachbarte Abstreifeinrichtungen (41, 42, 43) höhenversetzt zueinander angeordnet sind, wobei zumindest jede zweite Abstreifeinrichtung (41, 42, 43) höhenverstellbar ausgebildet ist, **dadurch gekennzeichnet, dass** die Höhenverstellung der Abstreifeinrichtungen (41, 42, 43) automatisch, insbesondere durch eine Hydraulik, erfolgt.

2. Furchenandruckvorrichtung (1) nach Anspruch 1, **dadurch gekennzeichnet, dass** die Abstreifeinrichtungen (41, 42, 43) plattenförmig ausgebildet sind und jeweils mit einem Anstellwinkel, insbesondere größer 10 Grad, zur Horizontalen angeordnet sind.

3. Furchenandruckvorrichtung (1) nach einem der vorhergehenden Ansprüche, **dadurch gekennzeichnet, dass** die, insbesondere plattenförmigen, Abstreifeinrichtungen (41, 42, 43) derart geneigt angeordnet sind, dass sie, insbesondere mit ihrer Haupterstreckungsebene, tangential zur Oberfläche der Andruckrolle (2) angeordnet sind.

4. Furchenandruckvorrichtung (1) nach Anspruch 2 oder Anspruch 3, **dadurch gekennzeichnet, dass** der Anstellwinkel bzw. die Neigung, insbesondere in Abhängigkeit der Höhe der Abstreifeinrichtung (41, 42, 43), einstellbar ist, wobei der Anstellwinkel bzw. die Neigung vorzugsweise automatisch, insbesondere hydraulisch, einstellbar ist.

5. Furchenandruckvorrichtung (1) nach einem der vorhergehenden Ansprüche, **dadurch gekennzeichnet, dass** die Abstreifeinrichtungen (41, 42, 43) in Richtung der Andruckrolle (2) spitz zulaufend ausgebildet sind.

## Claims

1. An agricultural furrow compaction device (1) having:
- a compaction roller (2) for compacting the soil,
- at least two scraper devices (41, 42, 43) for scraping soil off the compaction roller (2), wherein the scraper devices (41, 42, 43) are arranged next to one another in lateral direction along the compaction roller (2),
wherein
laterally adjacent scraper devices (41, 42, 43) are arranged offset in height relative to one another, wherein at least each second scraper device (41, 42, 43) is formed adjustable in height, **characterized in that** the height adjustment of the scraper devices (41, 42, 43) takes place automatically, in particular by a hydraulic system.

2. The furrow compaction device (1) according to Claim 1, **characterized in that** the scraper devices (41, 42, 43) are formed plate-shaped and are each arranged with a setting angle in particular greater than 10 degrees to the horizontal.

3. The furrow compaction device (1) according to any one of the preceding claims, **characterized in that** the in particular plate-shaped scraper devices (41, 42, 43) are arranged inclined in such a manner that they are arranged, in particular with their main extension plane, tangentially to the surface of the compaction roller (2).

4. The furrow compaction device (1) according to Claim 2 or Claim 3, **characterized in that** the setting angle or the inclination is adjustable in particular as a function of the height of the scraper device (41, 42, 43), wherein the setting angle or the inclination is adjustable preferentially automatically, in particular hydraulically.

5. The furrow compaction device (1) according to any one of the preceding claims, **characterized in that** the scraper devices (41, 42, 43) are formed converging into a point in the direction of the compaction roller (2).

## Revendications

1. Dispositif agricole de compression de fourche (1), présentant :
- un rouleau compresseur (2) pour compacter le sol,
- au moins deux dispositifs de raclage (41, 42, 43) pour racler la terre du rouleau compresseur (2), les dispositifs de raclage (41, 42, 43) étant disposées les uns après les autres dans le sens latéral le long du rouleau compresseur (2),
dans lequel
les dispositifs de raclage (41, 42, 43) voisin sont disposés décalés en hauteur les uns par rapport aux autres, au moins un dispositif de raclage (41, 42, 43) sur deux étant réglable en hauteur,
**caractérisé en ce que** le réglage en hauteur des dispositifs de raclage (41, 42, 43) a lieu automatiquement, en particulier par système hydraulique.

2. Dispositif de compression de fourche (1), selon la revendication 1, **caractérisé en ce que** les dispositifs de raclage (41, 42, 43) sont réalisés en forme de plaques et sont disposés respectivement avec un angle d'approche, en particulier supérieur à 10 degrés, par rapport à l'horizontale.

3. Dispositif de compression de fourche (1), selon une des revendications précédentes, **caractérisé en ce que** les dispositifs de raclage (41, 42, 43), en particulier en forme de plaques, sont disposés de manière à être disposés tangentiellement prévoit par rapport à la surface du rouleau compresseur (2), en particulier par leur plan principal d'extension.

4. Dispositif de compression de fourche (1) selon la revendication 2 ou la revendication 3, **caractérisé en ce que** l'angle d'approche ou d'inclinaison est réglable, en particulier en fonction de la hauteur des dispositifs de raclage (41, 42, 43), l'angle d'approche ou d'inclinaison étant réglable de préférence automatiquement, en particulier par système hydraulique.

5. Dispositif de compression de fourche (1), selon une des revendications précédentes 1, **caractérisé en ce que** les dispositifs de raclage (41, 42, 43) sont effilés en pointe en direction du rouleau compresseur (2).
